(19) Europäisches Patentamt / European Patent Office / Office européen des brevets

(11) **EP 4 443 211 A2**

(12) **EUROPEAN PATENT APPLICATION**

(43) Date of publication:
**09.10.2024 Bulletin 2024/41**

(51) International Patent Classification (IPC):
**G02B 7/08** *(2021.01)*    **G02B 9/60** *(2006.01)*
**G02B 13/00** *(2006.01)*    **G02B 13/18** *(2006.01)*

(21) Application number: **24196230.7**

(22) Date of filing: **23.08.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.08.2023 CN 202311079674**

(71) Applicant: **Jiangxi OFILM Optical Co. Ltd.**
**Nanchang, Jiangxi 330096 (CN)**

(72) Inventors:
• **ZHANG, Chenglin**
  **Nanchang, 330096 (CN)**
• **LIU, Binbin**
  **Shenzhen, 518106 (CN)**

(74) Representative: **Zaboliene, Reda**
**Metida**
**Business center Vertas**
**Gyneju str. 16**
**01109 Vilnius (LT)**

(54) **OPTICAL SYSTEM, LENS MODULE, AND ELECTRONIC DEVICE**

(57) An optical system, a lens module, and an electronic device. The optical system consists of five lenses having refractive power, from an object side to the image side along an optical axis of the optical system, the five lenses sequentially comprising a first lens, a second lens, a third lens, a fourth lens, and a fifth lens. The first, second, and third lens constitute a fixed lens group, the fourth and fifth lens constitute a movable lens group, the fixed lens group is fixed relative to an imaging surface of the optical system, and the movable lens group is capable of moving between the fixed lens group and the imaging surface along the optical axis. The first lens has positive refractive power, an object side surface of the first lens is convex near the optical axis, the second lens has negative refractive power, the third lens has positive refractive power, the fourth lens has negative refractive power, and the fifth lens has negative refractive power. The optical system satisfies following relational expressions: $0.9<TTL/fmax<1.1$, $34deg<FOV<50deg$, $0.7<TTL/ImgH<1.7$. Wherein, TTL is a distance from the object side surface of the first lens to the imaging surface of the optical system along the optical axis, fmax is a maximum effective focal length of the optical system, FOV is a maximum field of view of the optical system, and ImgH is a full image height corresponding to the maximum field of view of the optical system.

FIG. 1

EP 4 443 211 A2

**Description**

FIELD

The subject matter relates to field of optical imaging, and more particularly, to an optical system, a lens module, and an electronic device.

BACKGROUND

With the development of technology, especially the rapid development of optical systems, the optical systems are widely used in smart devices such as mobile phones and tablet personal computers, and people's demand on compact design of lenses is higher and higher. A traditional focusing method is generally implemented by moving the entire lens via a focus motor, so that an imaging surface of the lens can coincides with a photosensitive surface of the photosensitive chip. Therefore, a large space (mechanical back focus) needs to be reserved between the lens and the photosensitive chip, which is not conducive to the compact design of a lens module. Moreover, moving the entire lens requires a lot of power from the focus motor, which results in a larger focus motor. It is not conducive to the compact design of the lens module and will cause a focusing speed to decrease. Therefore, it is urgent to design an optical system to solve the above problems.

SUMMARY

An object of the present application is to provide an optical system, a lens module, and an electronic device, and the optical system has a continuous internal focusing function and a characteristic of miniaturization.

In order to achieve the object of the present application, the present application provides the following technical solutions:

In a first aspect, the present application provides an optical system. The optical system includes five lenses having refractive power. The five lenses sequentially include a first lens, a second lens, a third lens, a fourth lens, and a fifth lens from an object side to an image side along an optical axis. The first lens, the second lens, and the third lens constitute a fixed lens group, and the fourth lens and the fifth lens constitute a movable lens group. The fixed lens group is fixed relative to an imaging surface of the optical system, and the movable lens group is capable of moving between the fixed lens group and the imaging surface along the optical axis. The optical system satisfies the relational expression: $0.75<DLmax/TTL<0.84$, wherein DLmax is the maximum distance from an object side surface of the first lens to an image side surface of the fifth lens along the optical axis, and TTL is a distance from the object side surface of the first lens to the imaging surface of the optical system along the optical axis.

The present application uses the movable lens group to move between the fixed lens group and the imaging surface, so that the optical system can have the continuous internal focusing function. Moreover, a total track length of the optical system does not change during the movement of the movable lens group, that is, the optical system has a fixed total track length, which can further satisfy the requirement of compact design of the optical system. Also, focusing is achieved by moving only the lens group, which can further reduce the burden of the optical system on the motor, so that the effect of fast internal focusing of the optical system can be achieved by using a lower-power motor. Using five lenses with refractive power can evenly distribute the pressure of light refraction to each lens, thereby reducing the amount of light refracted by a single lens, and preventing the lens from being too curved, and thus avoiding increasing tolerance sensitivity. Also, the number of lenses in the movable lens group is set to two, so that the optical system can reduce the burden of the lens on the motor while ensuring clear imaging, power from the motor during focusing is lower, and an effect of fast focusing can be obtained.

When the above relational expression is satisfied, the optical system can have a reasonable structural layout. Thus, a space occupied by a lens body can be reduced on the basis of miniaturization, which leaves enough space for the back-end module to focus under different working object distance conditions. In this case, the optical system can realize horizontal structural layout while realizing the internal focusing function, thereby saving its manufacturing cost.

In a second aspect, the present application further provides a lens module. The lens module includes the optical system mentioned in any one of embodiments of the first aspect and a photosensitive chip, and the photosensitive chip is located on an image side of the optical system. By adding the optical system provided by the present application to the lens module, and by reasonably designing a surface shape and refractive power of each lens in the optical system and fixing the total track length, the lens module can have the continuous internal focusing function and the characteristic of miniaturization.

In a third aspect, the present application further provides an electronic device. The electronic device includes a housing and the lens module mentioned in the second aspect, and the lens module is located in the housing. By adding the lens module provided by the present application to the electronic device, the electronic device can have the continuous internal focusing function, thereby obtaining a faster focusing speed. The compact design of the lens module can also save more space for installing other component.

BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1 is a schematic diagram of an optical system according to a first embodiment when a movable lens group is located at a telephoto end.

FIG. 2 is a graph showing various aberrations of the optical system according to the first embodiment when the movable lens group is located at the telephoto end.

FIG. 3 is a schematic diagram of the optical system according to the first embodiment when the movable lens group is located at a wide-angle end.

FIG. 4 is a graph showing various aberrations of the optical system according to the first embodiment when the movable lens group is located at the wide-angle end.

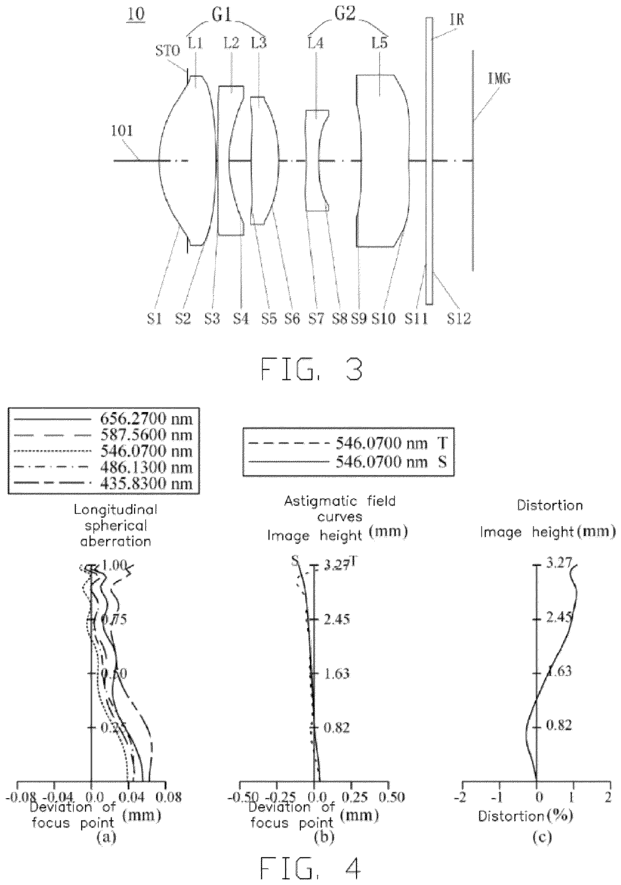

FIG. 4 is a schematic diagram of an optical system according to a second embodiment when a movable lens group is located at a telephoto end.

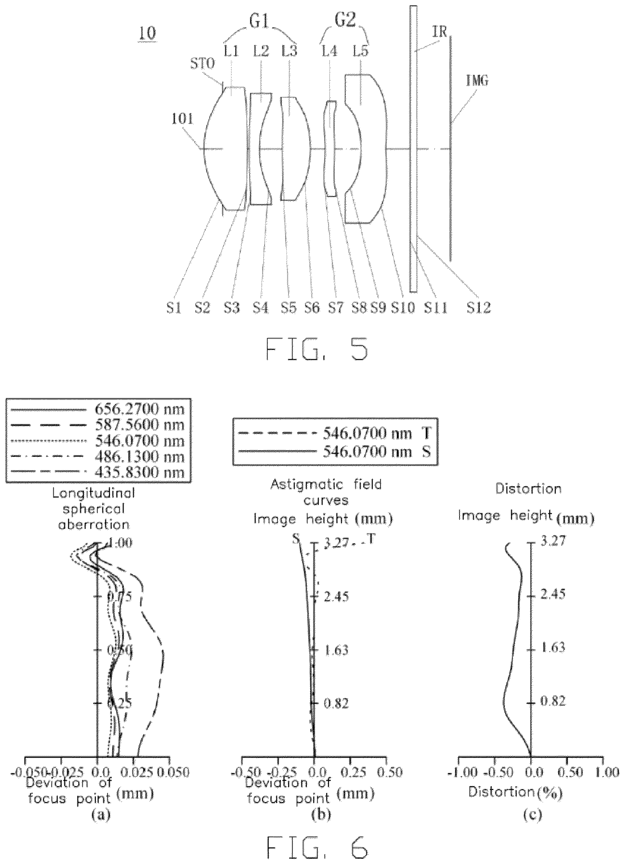

FIG. 6 is a graph showing various aberrations of the optical system according to the second embodiment when the movable lens group is located at the telephoto end.

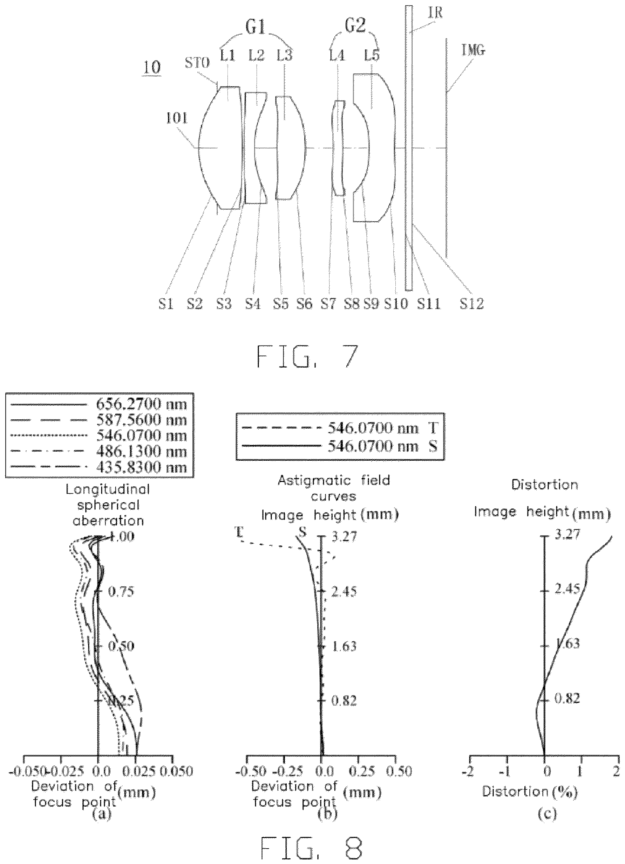

FIG. 7 is a schematic diagram of the optical system according to the second embodiment when the movable lens group is located at a wide-angle end.

FIG. 8 is a graph showing various aberrations of the optical system according to the second embodiment when the movable lens group is located at the wide-angle end.

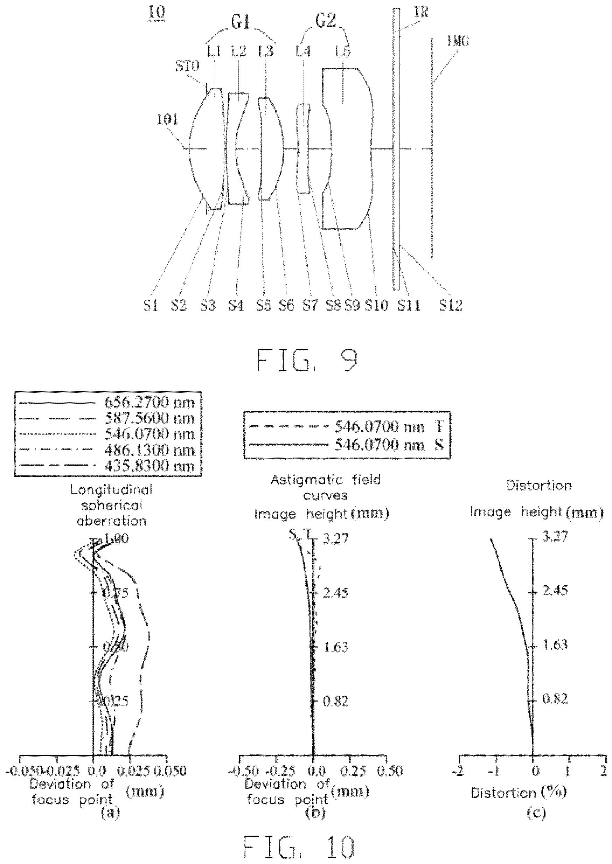

FIG. 9 is a schematic diagram of an optical system according to a third embodiment when a movable lens group is located at a telephoto end.

FIG. 10 is a graph showing various aberrations of the optical system according to the third embodiment when the movable lens group is located at the telephoto end.

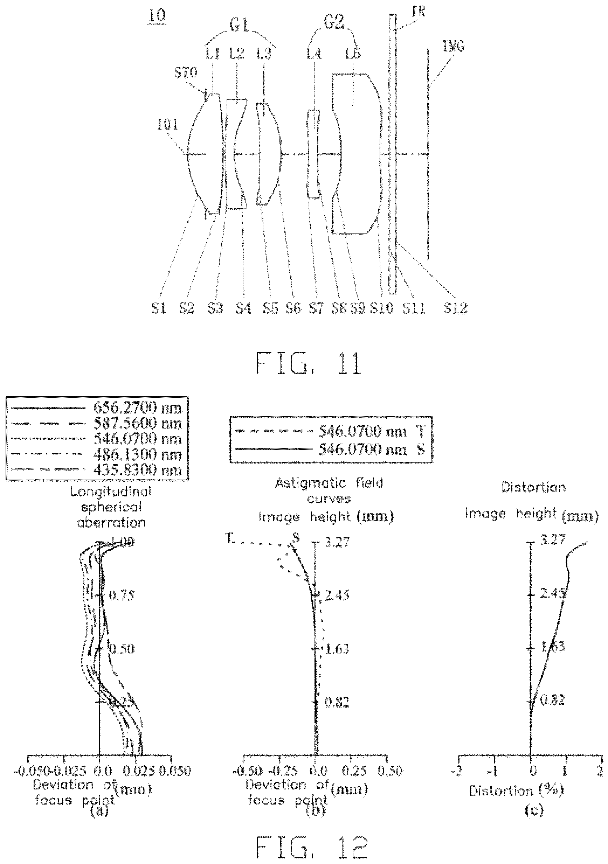

FIG. 11 is a schematic diagram of the optical system according to the third embodiment when the movable lens group is located at a wide-angle end.

FIG. 12 is a graph showing various aberrations of the optical system according to the third embodiment when the movable lens group is located at the wide-angle end.

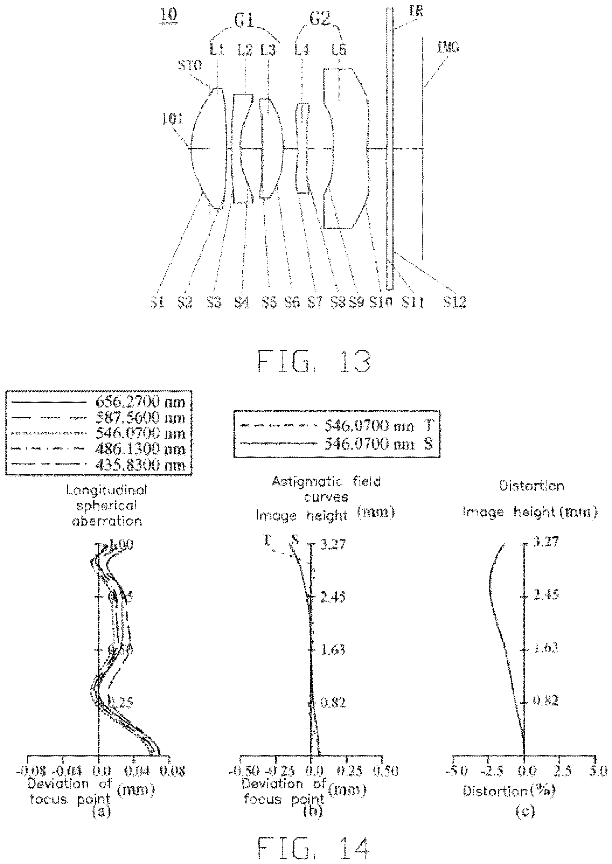

FIG. 13 is a schematic diagram of an optical system according to a fourth embodiment when a movable lens group is located at a telephoto end.

FIG. 14 is a graph showing various aberrations of the optical system according to the fourth embodiment when the movable lens group is located at the telephoto end.

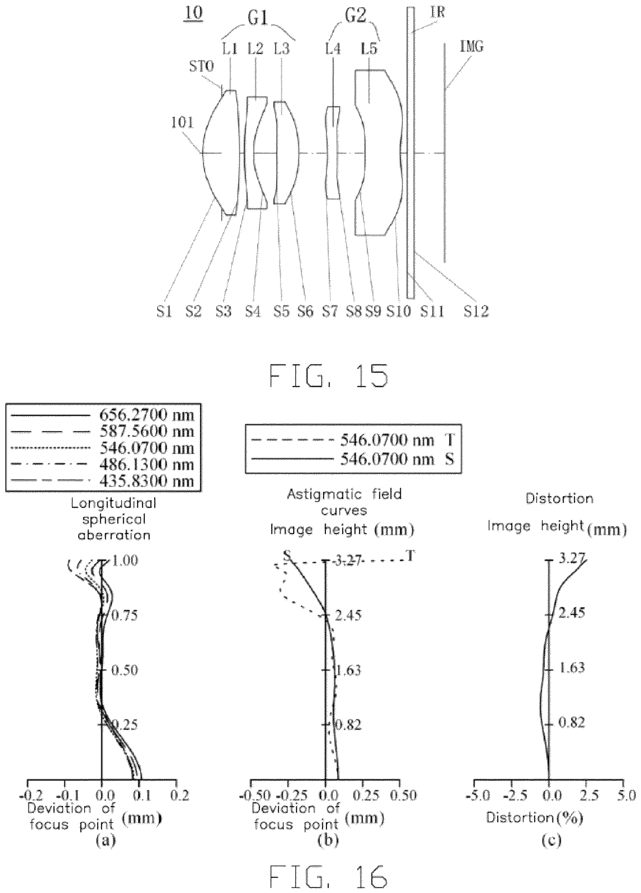

FIG. 15 is a schematic diagram of the optical system according to the fourth embodiment when the movable lens group is located at a wide-angle end.

FIG. 16 is a graph showing various aberrations of the optical system according to the fourth embodiment when the movable lens group is located at the wide-angle end.

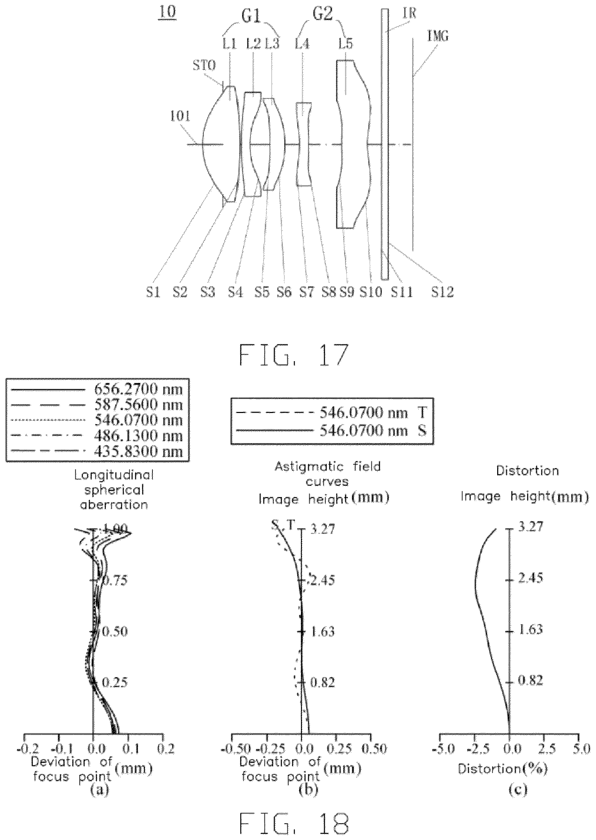

FIG. 17 is a schematic diagram of an optical system according to a fifth embodiment when a movable lens group is located at a telephoto end.

FIG. 18 is a graph showing various aberrations of the optical system according to the fifth embodiment when the movable lens group is located at the telephoto end.

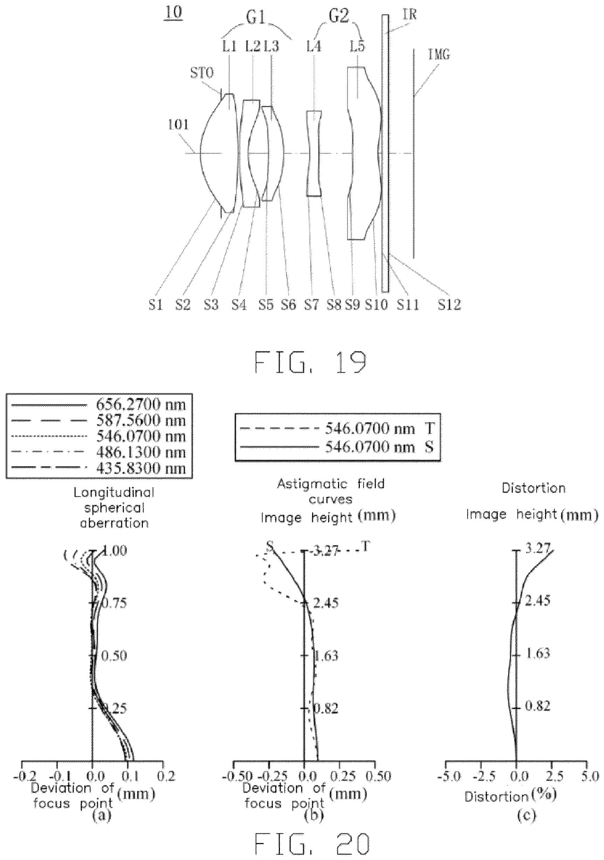

FIG. 19 is a schematic diagram of the optical system according to the fifth embodiment when the movable lens group is located at a wide-angle end.

FIG. 20 is a graph showing various aberrations of the optical system according to the fifth embodiment when the movable lens group is located at the wide-angle end.

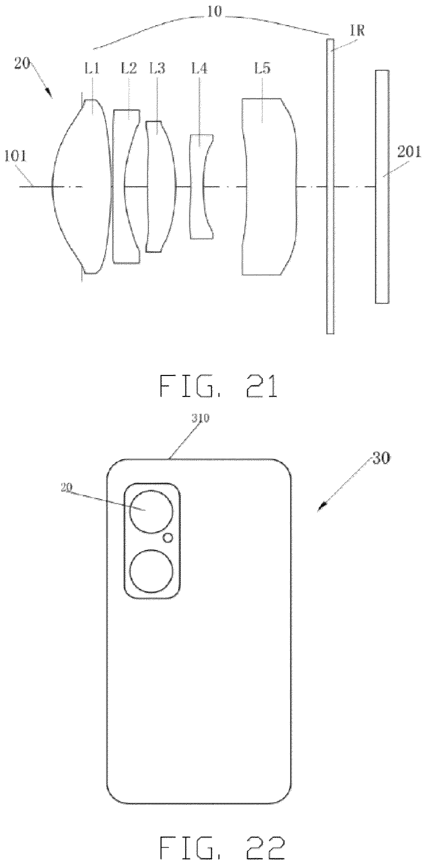

FIG. 21 is a schematic diagram of a lens module according to an embodiment the present application.

FIG. 22 is a schematic diagram of an electronic device according to an embodiment of the present application.

DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In a first aspect, the present application provides an optical system. The optical system includes five lenses having refractive power. The five lenses sequentially include a first lens, a second lens, a third lens, a fourth lens, and a fifth lens from an object side to an image side along an optical axis. The first lens, the second lens, and the third lens constitute a fixed lens group, and the fourth lens and the fifth lens constitute a movable lens group. The fixed lens group is fixed relative to an imaging surface of the optical system, and the movable lens group is capable of moving between the fixed lens group and the imaging surface along the optical axis.

The present application uses the movable lens group to move between the fixed lens group and the imaging surface, so that the optical system can have a continuous internal focusing function. Moreover, a total track length of the optical system does not change during the movement of the movable lens group, that is, the optical system has a fixed total track length, satisfy the requirement of compact design of the optical system. Also, focusing is achieved by moving only the lens group, which can further reduce the burden of the optical system on the motor, so that the effect of fast internal focusing of the optical system can be achieved by using a lower-power motor. Using five lenses with refractive power can evenly distribute the pressure of light refraction to each lens, thereby reducing the amount of light refracted by a single lens, and preventing the lens from being too curved, and thus avoiding increasing tolerance sensitivity. Also, the number of lenses in the movable lens group is set to two, so that the optical system can reduce the burden of the lens on the motor while ensuring clear imaging, power from the motor during focusing is lower, and an effect of fast focusing can be obtained.

In one embodiment, the first lens has positive refractive power, an object side surface of the first lens is convex near the optical axis, and an image side surface of the first lens is convex near the optical axis. The second lens has negative refractive power, an object side surface of the second lens is convex near the optical axis, and an image side surface of the second lens is concave near the optical axis. The third lens has positive refractive power, and an image side surface of the third lens is convex near the optical axis. The fourth lens has negative refractive power, and an object side surface of the fourth lens is concave near the optical axis. The fifth lens has negative refractive power, an object side surface of the fifth lens is concave near the optical axis, and an image side surface of the fifth lens is convex near the optical axis.

By setting the first lens to have positive refractive power, setting the object side surface of the first lens to be convex near the optical axis, and setting the image side surface of the first lens to be convex near the optical axis, it is beneficial to incidence and convergence of light in the field of view. The second lens has negative refractive power, the object side surface of the second lens is convex near the optical axis, and the image side surface of the second lens is concave near the optical axis, which may correct aberration caused by the front lens. The third lens has positive refractive power, and the image side surface of the third lens is convex near the optical axis, which may reasonably distribute refractive power of the optical system, thereby reducing amplitude of refractive power of the entire optical system moving toward the object side. Thus, the total track length of the optical system may be shortened, and the requirement of compact design may be achieved. The fourth lens has negative refractive power, which can better correct the field curvature and astigmatism of the optical system and can be matched with an image sensor with a large principal ray angle, thereby improving imaging quality. The object side surface of the fourth lens is concave near the optical axis, which can cooperate with the third lens to further shorten the total track length of the optical system, thereby allowing the structure of the optical system to be more compact. The fifth lens has negative refractive power, the object side surface of the fifth lens is concave near the optical axis, and the image side surface of the fifth lens is convex near the optical axis, which may enhance the negative refractive power of the fifth lens, increase a focal length of the optical system, and correct distortion and astigmatism.

In one embodiment, the optical system satisfies the relational expression: 0.75<DLmax/TTL<0.9. Wherein, DLmax is the maximum distance from an object side surface of the first lens to an image side surface of the fifth lens along the optical axis, and TTL is a distance from the object side surface of the first lens to the imaging surface of the optical system along the optical axis. Further, the optical system satisfies the relational expression: 0.75<DLmax/TTL<0.84. When the above relational expression is satisfied, the optical system can have a reasonable structural layout. Thus, a space occupied by a lens body can be reduced on the basis of miniaturization, which leaves enough space for the back-end module to focus under different working object distance conditions. In this case, the optical system can realize horizontal structural layout while realizing the internal focusing function, thereby saving its manufacturing cost.

In one embodiment, the optical system satisfies the relational expression: 34deg<FOV<50deg. Wherein, FOV is a maximum field of view of the optical system. When the above relational expression is satisfied, the maximum field of view of the optical system is controlled within a reasonable range, so that the optical system has a small field of view and telephoto effects, and back focus space reserved for focusing may be reduced.

In one embodiment, the optical system satisfies the relational expression: 0.9<TTL/fmax<1.1. Wherein, fmax is the maximum effective focal length of the optical system. When the above relational expression and the relational expression FOV<50deg are satisfied, a shorter total track length of the optical system can be provided, so that a lens module with the optical system can be more easily implanted in an electronic device, and the optical system can also have a better telephoto effect. The value of TTL/fmax can be 0.91, 0.93, 0.96, 0.99, 1.02, 1.05, 1.08, or 1.09.

In one embodiment, the optical system satisfies the relational expression: 0.2mm<(T34max-T34min)<0.7mm. Wherein, T34min is the minimum distance from the image side surface of the third lens to the object side surface of the fourth lens along the optical axis, and T34max is the maximum distance from the image side surface of the third lens to the object side surface of the fourth lens along the optical axis. Further, the optical system satisfies the relational expression: 0.3mm<(T34max-T34min)<0.6mm. When the above relational expression is satisfied, sizes and refractive power of the fixed lens group and the movable lens group can be reasonably limited. By moving the movable lens group, the total track length of the optical system remains unchanged under the condition of correcting imaging quality performance at different object distances, thereby realizing the internal focusing function of the optical system. Also, an amount of movement of the movable lens group from a telephoto end to a wide-angle end is controlled within 0.7mm, which can reduce a moving distance of the movable lens group and ensure that an amount of movement of a motor is within a reasonable range when the motor drives the movable lens group to move, thereby reducing technical requirements for the motor and improving adaptability and stability between components.

In one embodiment, the optical system satisfies the relational expression: 1<(|T23|+|T45|)/|T34max|<3. Wherein, T23 is a distance from the image side surface of the second lens to the object side surface of the third lens along the optical axis, T34max is the maximum distance from the image side surface of the third lens to the object side surface of the fourth lens along the optical axis, and T45 is a distance from the image side surface of the fourth lens to the object side surface of the fifth lens along the optical axis. Further, the optical system satisfies the relational expression: 1.5<(|T23|+|T45|)/|T34max|<2.4. When the above relational expression is satisfied, an incident angle and an exit angle of the light around the optical system can be small, which can slow down the change in direction of the light after it enters the optical system, thereby reducing the risk of astigmatism.

In one embodiment, the optical system satisfies the relational expression: (n1+n2)/2n1>1. Wherein, n1 is a refractive index of the first lens, and n2 is a refractive index of the second lens. When the above relational expression is satisfied, the refractive power of the first lens and the second lens can be properly distributed, thereby minimizing chromatic aberration and spherical aberration and improving image quality. By reasonably distributing the refractive power, light-gathering ability of the optical system is enhanced, and a size of the optical system may be reduced.

In one embodiment, the optical system satisfies the relational expression: IV2-V11>30. Wherein, V2 is an Abbe number of the second lens, and V1 is an Abbe number of the first lens. When the above relational expression is satisfied, the Abbe numbers of the first lens and the second lens can be reasonably limited, which is favorable for correcting the chromatic aberration produced by the optical system and ensuring an imaging performance of the optical system.

In one embodiment, the optical system satisfies the relational expression: 0.2<SD52/fmax<0.4. Wherein, SD52 is the maximum effective aperture radius of the image side surface of the fifth lens, and fmax is the maximum effective focal length of the optical system. When the above relational expression is satisfied, the maximum effective aperture radius of the image side surface of the fifth lens and a size of an aperture of the optical system can be reasonably limited, thereby ensuring that the optical system is miniaturized and has a large aperture.

In one embodiment, the optical system satisfies the relational expression: 0.5<|f123/fmax|<0.7, and/or 0.4<|f45/fmaxl<0.7, and/or -1.4<f123/f45<-1. Wherein, f123 is a combined focal length of the first lens, the second lens, and the third lens, f45 is a combined focal length of the fourth lens and the fifth lens, and fmax is the maximum effective focal length of the optical system. When the above relational expression is satisfied, refractive powers of the fixed lens group and the movable lens group can be controlled, which can avoid large spherical aberration caused by the fixed lens group, thereby improving overall resolution of the optical system. Also, it is favorable for compressing a distance between the fixed lens group and the movable lens group at different object distances, thereby allowing the optical system to form a small stroke internal focusing method. Also, when the refractive power of the fixed lens group is greater than zero, the light-gathering ability of the optical system can be enhanced. When the refractive power of the movable lens group is less than zero and its absolute value is small, it is favorable for compressing the stroke of the movable lens group and for achieving a continuous change of the object distance from infinity to a fixed value through a movement of the movable lens group.

In one embodiment, the optical system satisfies the relational expression: 0.3<ET1/CT1<0.6. Wherein, ET1 is an edge thickness of the first lens (i.e., a distance from a position where the object side surface of the first lens has the maximum effective aperture to a position where the image side surface of the first lens has the maximum effective aperture along the optical axis), and CT1 is a thickness of the first lens on the optical axis. When the above relational expression is satisfied, a ratio of the edge thickness to a center thickness of the first lens is within a reasonable range, which is beneficial to incidence and convergence of light within the field of view and beneficial to processing and molding of the first lens, thereby reducing processing difficulty of the lens and ensuring the quality and yield of the lens.

In one embodiment, the optical system satisfies the relational expression: 0.4<(|SAG11|+|SAG12|)/CT1<0.7. Wherein, SAG11 is a distance from an intersection of the object side surface of the first lens and the optical axis to a position where the object side surface of the first lens has the maximum effective aperture along a direction parallel to the optical axis, SAG12 is a distance from an intersection of the image side surface of the first lens and the optical axis to a position where the image side surface of the first lens has the maximum effective aperture along the direction parallel to the optical axis, and CT1 is a thickness of the first lens on the optical axis. When the above relational expression is satisfied, a ratio of a sagittal height of the first lens at the effective aperture to the center thickness of the first lens is within a reasonable range, which is beneficial to the incidence and convergence of light within the field of view. In this case, the refractive power and thickness of the first lens in a vertical direction can be reasonably limited to prevent the first lens from being too thin or too thick, which is beneficial to manufacturability of the first lens.

In one embodiment, the optical system satisfies the relational expression: $0.2<(|SAG51|+|SAG52|)/CT5<1$. Wherein, SAG51 is a distance from an intersection of the object side surface of the fifth lens and the optical axis to a position where the object side surface of the fifth lens has the maximum effective aperture along the direction parallel to the optical axis, SAG52 is a distance from the intersection of the image side surface of the fifth lens and the optical axis to a position where the image side surface of the fifth lens has the maximum effective aperture in the direction parallel to the optical axis, and CT5 is a thickness of the fifth lens on the optical axis. When the above relational expression is satisfied, a ratio of the sagittal height of the lens at the effective aperture to a center thickness of the fifth lens is within a reasonable range, which is beneficial to the incidence and convergence of light and beneficial to correcting the distortion and field curvature generated by the first lens to the fourth lens. In this case, the refractive power close to the imaging surface can be evenly distributed, that is, the refractive power and thickness of the fifth lens in the vertical direction can be reasonably limited, thereby preventing the fifth lens from being too thin or too thick, delaying the incident angle of light to the imaging surface, and reducing sensitivity of the optical system.

In one embodiment, the optical system satisfies the relational expression: $0.4<SD4/SD5<0.7$, and/or $1<SD32/SD41<1.4$. Wherein, SD4 is a larger value of the maximum effective aperture of the object side surface of the fourth lens and the maximum effective aperture of the image side surface of the fourth lens, SD5 is a larger value of the maximum effective aperture of the object side surface of the fifth lens and the maximum effective aperture of the image side surface of the fifth lens, SD32 is the maximum effective aperture of the image side surface of the third lens, and SD41 is the maximum effective aperture of the object side surface of the fourth lens. Further, the optical system satisfies the relational expression: $1<SD32/SD41<1.3$. When the above relational expression is satisfied, aperture sizes of the third lens, the fourth lens, and the fifth lens can be controlled, which can reduce the exit angle of the incident light, suppress astigmatism and field curvature, and ensure reasonable structural size of the third lens, the fourth lens, and the fifth lens. Thus, it is conducive to realizing compact structure of the optical system. Further, an aperture of the image side surface of the third lens is larger than an aperture of the object side surface of the fourth lens, which is also beneficial to reducing the travel of the movable lens group and reducing the spherical aberration and coma introduced by the fixed lens group.

In one embodiment, the optical system satisfies the relational expression: $-3<fmax/R32<-1$, and/or $2<fmax/R22<3$. Wherein, fmax is the maximum effective focal length of the optical system, R32 is a radius of curvature of the image side surface of the third lens, and R22 is a radius of curvature of the image side surface of the second lens. When the above relational expression is satisfied, the refractive power and radius of curvature of the second lens and the third lens can be reasonably limited, which can suppress the field curvature and distortion in the optical system, improve the overall imaging quality of the optical system, effectively control the rear focal length of the optical system, and avoid the total track length of the optical system being too long. It is also beneficial to reduce complexity of surface shapes of the second lens and the third lens, thereby reducing difficulty of molding the second lens and the third lens.

In one embodiment, the optical system satisfies the relational expression: $1<CT3/CT2<3$, and/or $3<CT1/CT2<5.5$. Wherein, CT1 is a thickness of the first lens on the optical axis, CT2 is a thickness of the second lens on the optical axis, and CT3 is a thickness of the third lens on the optical axis.

When the above relational expression is satisfied, a ratio of a center thickness of the first lens to a center thickness of the second lens is greater than 1, and a ratio of a center thickness of the third lens to a center thickness of the second lens is also greater than 1, so that thicknesses of the lenses can be controlled, which is beneficial to reducing the sensitivity of the optical system and ensuring compact design of the optical system.

In one embodiment, the optical system satisfies the relational expression: $-30<CT3/SAG31<-2$. Wherein, CT3 is the thickness of the third lens on the optical axis, and SAG31 is a distance from the intersection of the object side surface of the third lens and the optical axis to a position where the object side surface of the third lens has the maximum effective aperture along the optical axis. When the above relational expression is satisfied, the refractive power and the center thickness of the third lens in the vertical direction can be controlled, which can prevent the third lens from being too thin or too thick and delay the incident angle of light to the image side, thereby reducing the sensitivity of the optical system. A value of CT3/SAG31 can be -29, -25, -20, -15, -10, -5, or -2.

In one embodiment, the optical system satisfies the relational expression: $0.7<TTL/ImgH<1.7$. Wherein, ImgH is a full image height corresponding to the maximum field of view of the optical system. Further, the optical system satisfies the relational expression: $0.9<TTL/ImgH<1.6$. When the above relational expression is satisfied, a ratio of the total track length of the optical system to the image height is small, which can satisfy the internal focusing characteristics of the optical system, so that the optical system can be ultra-thin, the optical system can be easily assembled to an interior of an equipment, and the telephoto function can be obtained.

In one embodiment, the optical system satisfies the relational expression: 0.2<CT5/ΣCT<0.35. Wherein, CT5 is the thickness of the fifth lens on the optical axis, and ΣCT is the sum of thicknesses of the first lens, the second lens, the third lens, the fourth lens, and the fifth lens on the optical axis. When the above relational expression is satisfied, the thickness of the fifth lens accounts for 115 to 1/3 of the sum of the thicknesses of the five lenses. In this case, the lenses in the optical system are reasonably distributed, which ensures that the fifth lens has a larger space for optimization, thereby improving the degree of correction of various aberrations of the optical system and the degree of light convergence and improving the overall resolution of the optical system.

In one implementation, the optical system satisfies the relational expression: 2<CT5/CT4<5. Wherein, CT4 is the thickness of the fourth lens on the optical axis, and CT5 is the thickness of the fifth lens on the optical axis. When the above relational expression is satisfied, the thicknesses of the fourth lens and the fifth lens can be reasonably limited, which can effectively utilize the space of the optical system, facilitate the manufacture and assembly of the fourth lens and the fifth lens, reduce the sensitivity of the lens, and improve the manufacturing yield of the lenses.

In one implementation, the optical system satisfies the relational expression: 1.3<SD52/SD51<1.8. Wherein, SD51 is the maximum effective aperture radius of the object side surface of the fifth lens, and SD52 is the maximum effective aperture radius of the image side surface of the fifth lens. When the above relational expression is satisfied, the aperture of the fifth lens can be reasonably limited, which is beneficial to reducing the exit angle of the incident light, suppressing astigmatism and field curvature, ensuring that the structural size of the fifth lens is appropriate, and improving the structural compactness of the optical system.

In one embodiment, the optical system satisfies the relational expression: 0.4<f1/fmax<0.7, and/or -0.9<f2/fmax<-0.7, and/or 0.7<f3/fmax<1.1, and/or -6<f4/fmax<-0.5, and/or -2.1<f5/fmax<-0.7. Wherein, fmax is the maximum effective focal length of the optical system, f1 is a focal length of the first lens, f2 is a focal length of the second lens, f3 is a focal length of the third lens, f4 is a focal length of the fourth lens, and f5 is a focal length of the fifth lens. When the above relational expression is satisfied, the refractive power of each lens is reasonably distributed, thereby ensuring that the focal length is within a reasonable range, so that the principal point of the optical system is located on the object side, and the optical system can be compact. Also, reasonable distribution of refractive power allows to reduce the comprehensive spherical aberration, chromatic aberration and distortion produced by the fixed lens group to a reasonable level, thereby reducing the design difficulty of the movable lens group. Reasonable distribution of refractive power of lens can also balance the larger spherical aberration produced by the fixed lens group, improve the overall resolution of the optical system, and strengthen the correction of aberration in the peripheral region of the optical system.

In one embodiment, the optical system satisfies the relational expression: -0.35<R11/R12<-0.1, and/or 4<R21/R22<14, and/or -20<R31/R32<-4, and/or -0.5<R41/R42<0.8, and/or 0.6<R51/R52<3. Wherein, R11 is a radius of curvature of the object side surface of the first lens, R12 is a radius of curvature of the image side surface of the first lens, R21 is a radius of curvature of the object side surface of the second lens, R22 is a radius of curvature of the image side surface of the second lens, R31 is a radius of curvature of the object side surface of the third lens, R32 is a radius of curvature of the image side surface of the third lens, R41 is a radius of curvature of the object side surface of the fourth lens, R42 is a radius of curvature of the image side surface of the fourth lens, R51 is a radius of curvature of the object side surface of the fifth lens, and R52 is a radius of curvature of the image side surface of the fifth lens. When the above relational expression is satisfied, the curvature of each lens is controlled within a reasonable range, which can ensure the processing yield, effectively correct spherical aberration and astigmatism, and improve the imaging quality of the optical system. When the curvature of the lens is less than the above range, the object side surface is excessively curved, which will cause poor molding and affect the manufacturing yield. When the curvature of the lens is greater than the above range, the surface of the lens is too smooth, which increases the difficulty of aberration correction, so that the relative brightness of an edge field of view is low. Therefore, the imaging quality of the optical system is affected.

Each of the aforementioned features of the optical system can be utilized in various combinations for achieving the corresponding effects.

In one embodiment, the lenses thereof can be made of glass or plastic materials. When the lenses are made of glass materials, the distribution of the refractive power of the lenses in the optical system may be more flexible to design. The glass lens can either be made by grinding or molding. When the lenses are made of plastic materials, manufacturing costs can be effectively reduced. Further, surfaces of each lens can be arranged to be aspheric (ASP), since the aspheric surface of the lens is easy to form a shape other than a spherical surface so as to have more controllable variables for eliminating aberrations thereof, and to further decrease the required amount of lenses in the optical system. Therefore, the total track length of the optical system can also be reduced. The aspheric surfaces may be formed by a plastic injection molding method, a glass molding method or other manufacturing methods.

In one embodiment, additives can be selectively added into any one (or more) material of the lenses so as to change the transmittance of the lens element in a particular wavelength range. In one embodiment, when a surface of the lens is aspheric, it indicates that entire optical effective region of the surface of the lens or a part thereof is aspheric.

In one embodiment, when the lenses have surfaces being convex and the convex surface position is not defined, it indicates that the aforementioned surfaces of the lens elements can be convex in the paraxial region thereof. When the lenses have surfaces being concave and the concave surface position is not been defined, it indicates that the aforementioned surfaces of the lenses can be concave in the paraxial region thereof. In the optical system of the present application, if the lens has positive refractive power or negative refractive power, or the focal length of the lens, all can be referred to the refractive power, or the focal length, in the paraxial region of the lens. In one embodiment, a critical point is a non-axial point of the lens surface where its tangent is perpendicular to the optical axis, and an inflection point is a point on a lens surface with a curvature changing from positive to negative or from negative to positive.

In one embodiment, at least one element with light path folding function can be selectively disposed between an imaged object and the imaging surface, such as a prism or a mirror, etc. Therefore, it is favorable for providing high flexible space arrangement of the optical system, so that the compactness of an electronic device would not be restricted by the optical total track length of the optical system. In one embodiment, the optical system may also be selectively disposed with three or more light path folding elements, the type, amount and location of the light path folding element will not be limited to the present application.

In one embodiment, the optical system of the present application can be applied to 3D (three-dimensional) image capturing applications, in products such as digital cameras, mobile devices, digital tablets, smart TVs, surveillance systems, motion sensing input devices, driving recording systems, rearview camera systems, wearable devices, unmanned aerial vehicles, and other electronic imaging products.

In a second aspect, the present application further provides a lens module, the lens module includes the optical system of any one embodiment of the first aspect and a photosensitive chip, and the photosensitive chip is located on the image side of the optical system. By adding the optical system provided by the present application to the lens module, and by reasonably designing a surface shape and refractive power of each lens in the optical system and fixing the total track length, the lens module can have the characteristics of continuous internal focusing function and miniaturization. In one embodiment, the lens module further includes a barrel member, a holder member or a combination thereof.

In a third aspect, the present application further provides an electronic device. The electronic device includes a housing and the lens module mentioned in the second aspect, and the lens module is located in the housing. By adding the lens module provided by the present application to the electronic device, the electronic device can have the continuous internal focusing function, thereby obtaining a faster focusing response speed. Compact design of the lens module design can also save more space for installing other devices. In one embodiment, the electronic device may further include a control unit, a display unit, a storage unit, a temporary storage unit or a combination thereof.

First embodiment

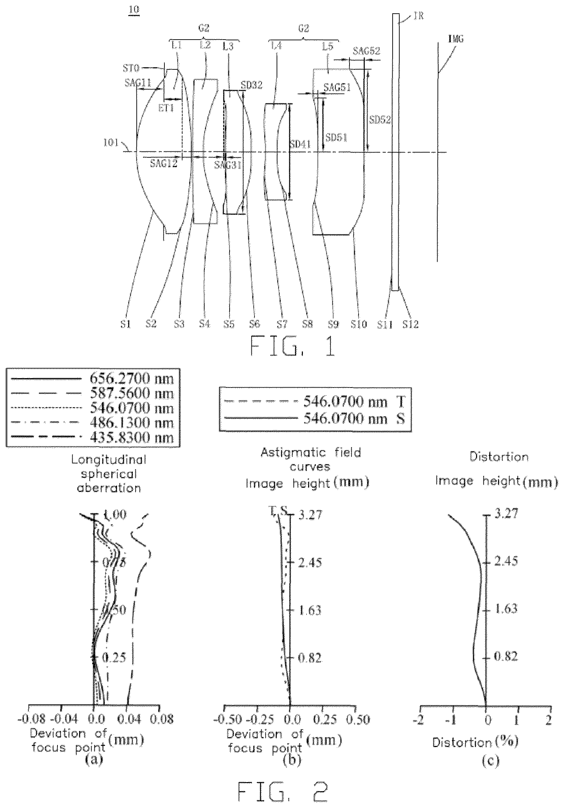

Referring to FIGS. 1 to 4, an optical system of the first embodiment sequentially includes a first lens L1, a second lens L2, a third lens L3, a fourth lens L4, and a fifth lens L5 from an object side to an image side.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is convex near the optical axis, and an image side surface S4 of the second lens L2 is concave near the optical axis.

The third lens L3 has positive refractive power, an object side surface S5 of the third lens L3 is convex near the optical axis, and an image side surface S6 of the third lens L3 is convex near the optical axis.

The fourth lens L4 has negative refractive power, and an object side surface S7 of the fourth lens L4 is concave near the optical axis, and an image side surface S8 of the fourth lens L4 is concave near the optical axis.

The fifth lens L5 has negative refractive power, an object side surface S9 of the fifth lens L5 is concave near the optical axis, and an image side surface S10 of the fifth lens L5 is convex near the optical axis.

Moreover, the optical system also includes an aperture stop STO, an optical filter IR, and an imaging surface IMG. In this embodiment, the aperture stop STO is arranged in front of the first lens L1 so as to control the amount of incoming light. In other embodiments, the aperture stop STO can also be arranged between two lenses, for example, the aperture stop STO is arranged between the first lens L1 and the second lens L2. The optical filter IR can be an infrared cutoff filter or a dual-channel optical filter, which is arranged between the fifth lens L5 and the imaging surface IMG and includes an object side S11 and an image side S12. The material of the optical filter IR is glass (GLASS), and a film can be coated on the lens. The materials of the first lens L1 to the fifth lens L5 are plastic. In other embodiments, the materials of lenses can also be glass. The materials of lenses can also be a mixture of glass and plastic, that is, some of the lenses are plastic and the other lenses are glass. An effective pixel area of the photosensitive chip is located on the imaging surface.

The first lens L1, the second lens L2, and the third lens L3 constitute a fixed lens group G1, and the fourth lens L4 and the fifth lens L5 constitute a movable lens group G2. The movable lens group G2 can move between the first lens group G1 and the image plane IMG along the optical axis 101, thereby achieving an internal focusing effect of the optical system.

During photographing, when an object distance gradually decreases, the second lens group G2 moves away from the fixed lens group G1 along the optical axis; when the object distance gradually increases, the second lens group G2 moves toward the fixed lens group G1 along the optical axis. In other embodiments, when the object distance gradually decreases, the second lens group G2 moves toward the fixed lens group G1 along the optical axis; when the object distance gradually increases, the second lens group G2 moves away from the fixed lens group G1 along the optical axis.

Table 1a shows parameters of the optical system of the embodiment. A reference wavelength of the focal length of the lens is 555 nm, and a reference wavelength of the refractive index and Abbe number of the lens is 587.5618 nm. The Y radius in Table 1a is the radius of curvature of the object side surface or image side surface with the corresponding surface number on the optical axis 101. The surface numerals S1 and S2 are the object side surface S1 and image side surface S2 of the first lens, respectively. That is, for a same lens, the surface with a smaller surface numeral is the object side surface of the lens, and the surface with a larger surface is the image side surface of the lens. In a "thickness" column of the first lens L1a, the first value is the thickness of the lens on the optical axis 101, and the second value is the distance from the image side surface of the lens to the next optical surface (the object side surface or the aperture surface of the next lens) on the optical axis 101. The units of the Y radius, thickness, and focal length are mm. Table 1b is the supplementary parameters of Table 1a, which are specifically the upper limit values of the parameters when the movable lens group G2 moves along the optical axis.

Table 1a

| First embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length |
| object side | object side | sphere | infinity | A | | | | |
| Aperture stop | STO | sphere | infinity | -0.893 | | | | |
| S1 | L1 | asphere | 3.290 | 1.796 | plastic | 1.547 | 56.110 | 4.772 |
| S2 | | asphere | -10.153 | 0.050 | | | | |
| S3 | L2 | asphere | 56.917 | 0.353 | plastic | 1.641 | 23.900 | -7.072 |
| S4 | | asphere | 4.189 | 0.693 | | | | |
| S5 | L3 | asphere | 16.000 | 0.864 | plastic | 1.547 | 56.110 | 7.582 |
| S6 | | asphere | -5.485 | B | | | | |
| S7 | L4 | asphere | -5.389 | 0.378 | plastic | 1.547 | 56.110 | -6.644 |
| S8 | | asphere | 11.405 | 1.331 | | | | |
| S9 | L5 | asphere | -20.474 | 1.492 | plastic | 1.547 | 56.110 | -20.811 |
| S10 | | asphere | -6.936 | C | | | | |
| S11 | optical filter IR | sphere | infinity | 0.210 | glass | 1.519 | 64.170 | |
| S12 | | sphere | infinity | 1.264 | | | | |
| IMG | imaging surface | sphere | infinity | 0.000 | | | | |

Table 1b

| | FNO | TTL (mm) | A(mm) | B(mm) | C(mm) | f(mm) | FOV(°) |
|---|---|---|---|---|---|---|---|
| telephoto end | 2.2 | 9.84 | infinity | 0.463 | 0.948 | 10.06 | 36.4 |
| wide-angle end | 2.0 | 9.84 | 100 | 0.873 | 0.538 | 8.62 | 34.4 |

As shown in Table 1a and Table 1b, f is the focal length of the optical system, FNO is the aperture number of the optical system, FOV is the maximum field of view of the optical system, and TTL is the distance from the object side surface of the first lens to the imaging surface IMG of the optical system along the optical axis 101.

In this embodiment, object side surfaces and the image side surfaces of the first lens L1 to the fifth lens L5 are all aspherical surfaces. In other embodiments, the object side surfaces and the image side surfaces of the first lens L1 to the fifth lens L5 may also be spherical surfaces, or a combination of spherical surfaces and aspherical surfaces. For example, the object side surface S 1 of the first lens is a spherical surface, and the image side surface S2 is an aspherical surface.

The surface shape x of aspherical surface may be expressed by, but not limited to, the following aspherical formula:

$$x = \frac{ch^2}{1 + \sqrt{1 - (k+1)c^2h^2}} + \sum A_i h^i$$

Wherein, x is a distance from a corresponding point of the aspherical surface to a plane tangent to the vertex, h is a distance from any point on the aspherical surface to the optical axis 101, c is a curvature of a vertex of the aspherical surface, k is cone constant, and Ai is a coefficient corresponding to the $i^{th}$ higher-order term in the above aspherical formula. Table 1c shows the coefficients of high-order terms A4, A6, A8, A10, A12, A14, A16, A18, A20, A22, A24, A26, A28, A30 of the aspheric mirrors S1 to S14 that can be used in the first embodiment.

Table 1c

| First embodiment | | | | |
|---|---|---|---|---|
| Aspherical coefficient | | | | |
| Surface numeral | S1 | S2 | S3 | S4 | S5 |
| k | -7.7201E+00 | -8.5785E+01 | 0.0000E+00 | -6.1948E-01 | -1.6327E+01 |
| A4 | 4.1756E-01 | -9.9308E-02 | -4.8582E-02 | -2.3276E-02 | -1.6213E-01 |
| A6 | -6.6076E-02 | -1.0911E-02 | 1.4311E-02 | -4.5072E-03 | 2.1092E-03 |
| A8 | -9.0726E-04 | -3.7746E-03 | 1.3883E-02 | 6.8559E-03 | 1.1661E-03 |
| A10 | -4.3651E-03 | 2.7866E-03 | 5.5575E-03 | 2.4711E-03 | 6.0674E-04 |
| A12 | -9.1119E-05 | -2.6739E-03 | -1.3707E-03 | -2.3101E-03 | -3.4854E-04 |
| A14 | -2.3152E-04 | 1.9807E-03 | 3.6924E-03 | -1.1280E-03 | -1.8145E-04 |
| A16 | 9.2637E-05 | -9.0097E-04 | -2.6864E-04 | -9.3816E-04 | 9.4469E-06 |
| A18 | 6.2257E-05 | 2.9933E-04 | 8.6104E-04 | -3.5428E-04 | 2.4228E-05 |
| A20 | 8.8257E-06 | -7.4551E-05 | 1.7099E-04 | -5.4559E-05 | 2.5794E-05 |
| Surface numeral | S6 | S7 | S8 | S9 | S10 |
| K | -1.6327E+01 | -4.2925E+01 | 4.8435E+01 | 0.0000E+00 | 0.0000E+00 |
| A4 | -1.6213E-01 | 1.3597E-01 | 1.9256E-01 | 5.5377E-02 | 3.5019E-01 |
| A6 | 2.1092E-03 | -7.4309E-03 | -8.7455E-03 | -2.1739E-01 | 2.6405E-01 |
| A8 | 1.1661E-03 | 7.7261E-05 | 2.3538E-04 | 2.5294E-01 | -1.1302E-01 |
| A10 | 6.0674E-04 | -2.8450E-04 | -6.6711E-04 | -7.1201E-02 | 9.9240E-02 |
| A12 | -3.4854E-04 | -2.8586E-04 | -4.9111E-04 | 5.5409E-02 | -1.1584E-01 |
| A14 | -1.8145E-04 | -1.5950E-04 | -2.5555E-04 | -7.8450E-02 | 1.2220E-01 |
| A16 | 9.4469E-06 | -5.5361E-05 | -1.6329E-04 | 4.6713E-02 | -8.7426E-02 |
| A18 | 2.4228E-05 | -4.7111E-05 | -8.0592E-05 | -6.0279E-03 | 4.0525E-02 |
| A20 | 2.5794E-05 | -1.5220E-05 | -5.2272E-05 | -3.3516E-03 | -9.6884E-03 |
| A22 | 0.0000E+00 | 0.0000E+00 | 0.0000E+00 | 3.8667E-03 | 2.0188E-03 |

(continued)

| First embodiment | | | | |
|---|---|---|---|---|
| Aspherical coefficient | | | | |
| Surface numeral | S1 | S2 | S3 | S4 | S5 |
| A24 | 0.0000E+00 | 0.0000E+00 | 0.0000E+00 | -1.0421E-02 | -4.8199E-03 |
| A26 | 0.0000E+00 | 0.0000E+00 | 0.0000E+00 | 1.1509E-02 | 6.7744E-03 |
| A28 | 0.0000E+00 | 0.0000E+00 | 0.0000E+00 | -5.1873E-03 | -4.1922E-03 |
| A30 | 0.0000E+00 | 0.0000E+00 | 0.0000E+00 | 6.4547E-04 | 1.2652E-03 |

Referring to (a) of FIG. 2, a longitudinal spherical aberration diagram of the optical system of the first embodiment when the movable lens group is located at the telephoto end is shown. Referring to (a) of FIG. 4, a longitudinal spherical aberration diagram of the optical system of the first embodiment when the movable lens group is located at the wide-angle end is shown. The reference wavelengths are 656.2700nm, 587.5600nm, 546.0700nm, 486.1300nm and 435.8300nm. The horizontal coordinate along X-axis represents deviation of the focus point, and the vertical coordinate along Y-axis represents the normalized field of view. The longitudinal spherical aberration curve shows the deviation of the focal point of light at different wavelengths after passing through each lens of the optical system. From (a) of FIG. 2, the spherical aberration of the optical system of the first embodiment is good, indicating that the imaging quality of the optical system of this embodiment is good.

Referring to (b) of FIG. 2, an astigmatism diagram of the optical system of the first embodiment when the movable lens group is located at the telephoto end is shown. Referring to (b) of FIG. 4, an astigmatism diagram of the optical system of the first embodiment when the movable lens group is located at the wide-angle end is shown. The horizontal coordinate along X-axis represents deviation of the focus point, and the vertical coordinate along Y-axis represents the image height in mm. T of the astigmatism diagram represents the curvature of the imaging surface IMG in the tangential direction, and S represents the curvature of the imaging surface IMG in the sagittal direction. From (b) of FIG. 2, the astigmatism of the optical system has been compensated.

Referring to (c) of FIG. 2, a distortion diagram of the optical system of the first embodiment when the movable lens group is located at the telephoto end is shown. Referring to (c) of FIG. 4, a distortion diagram of the optical system of the first embodiment when the movable lens group is located at the wide-angle end is shown. The horizontal coordinate along X-axis represents the distortion, and the vertical coordinate along Y-axis represents the image height. The distortion curve indicates the distortion value corresponding to different field of view. From (c) of FIG. 2, the distortion of the optical system has been corrected at the wavelength. It can be seen from (a), (b), (c) in FIG. 2 and (a), (b), (c) in FIG. 4 that the optical system of this embodiment has small aberration and good imaging quality.

Second embodiment

Referring to FIG. 5 to FIG. 8, the difference between a structure of the second embodiment and a structure of the first embodiment is that the image side surface S8 of the fourth lens L4 is convex on the optical axis. The other of the structure of the second embodiment is referred to the other of the structure of first embodiment.

Table 2a

| second embodiment | | | | | | | | |
|---|---|---|---|---|---|---|---|---|
| Surface numeral | Lens numeral | Surface type | Y RADIUS (mm) | Thickness (mm) | Material | refractive index | Abbe number | Focal length (mm) |
| object side | object side | sphere | infinity | A | | | | |
| Aperture stop | STO | sphere | infinity | -0.574 | | | | |
| S1 | L1 | asphere | 2.678 | 1.360 | plastic | 1.547 | 56.110 | 4.528 |
| S2 | | asphere | -26.642 | 0.050 | | | | |

(continued)

| Surface numeral | Lens numeral | Surface type | Y RADIUS (mm) | Thickness (mm) | Material | refractive index | Abbe number | Focal length (mm) |
|---|---|---|---|---|---|---|---|---|
| | | | second embodiment | | | | | |
| object side | object side | sphere | infinity | A | | | | |
| S3 | L2 | asphere | 27.012 | 0.320 | plastic | 1.641 | 23.900 | -5.670 |
| S4 | | asphere | 3.189 | 0.716 | | | | |
| S5 | L3 | asphere | 16.000 | 0.875 | plastic | 1.547 | 56.110 | 5.266 |
| S6 | | asphere | -3.441 | B | | | | |
| S7 | L4 | asphere | -6.332 | 0.300 | plastic | 1.547 | 56.110 | -43.125 |
| S8 | | asphere | -8.802 | 0.816 | | | | |
| S9 | L5 | asphere | -2.394 | 0.788 | plastic | 1.547 | 56.110 | -5.138 |
| S10 | | asphere | -3.450 | C | | | | |
| S11 | optical filterIR | sphere | infinity | 0.210 | glass | 1.519 | 64.170 | |
| S12 | | sphere | infinity | 1.062 | | | | |
| IMG | imaging surface | sphere | infinity | 0.000 | | | | |

table 2b

| | FNO | TTL (mm) | A(mm) | B(mm) | C(mm) | f(mm) | FOV(°) |
|---|---|---|---|---|---|---|---|
| telephoto end | 2.2 | 7.70 | infinity | 0.46 | 0.608 | 7.3 | 48.5 |
| wide-angle end | 2.0 | 7.70 | 100 | 1.01 | 0.338 | 6.38 | 47.6 |

Table 2c shows the coefficients of the higher-order terms that can be used for each aspherical mirror surface in the second embodiment, wherein each aspherical surface shape can be defined by the formula provided in the first embodiment.

table 2c

| | | | | | |
|---|---|---|---|---|---|
| | | second embodiment | | | |
| | | Aspherical coefficient | | | |
| Surface numeral | S1 | S2 | S3 | S4 | S5 |
| K | -7.0096E+00 | -9.8018E+01 | 0.0000E+00 | -6.6387E-01 | 0.0000E+00 |
| A4 | 3.9682E-01 | -8.6643E-02 | -6.8849E-02 | -2.7526E-02 | -1.5726E-01 |
| A6 | -1.0698E-01 | -2.5268E-02 | -5.9066E-04 | -2.6391E-02 | -7.0002E-03 |
| A8 | 1.9798E-03 | -2.0072E-03 | 2.6932E-02 | 2.0072E-02 | 1.8652E-02 |
| A10 | -7.2087E-04 | 4.8251E-03 | 3.5223E-03 | -2.0159E-03 | 6.3807E-03 |
| A12 | 3.4749E-03 | -4.2915E-03 | -1.7098E-03 | -6.6710E-03 | -3.5043E-03 |
| A14 | 6.8837E-04 | 3.4759E-03 | 6.7973E-03 | 9.6755E-04 | -4.7513E-03 |
| A16 | 3.2469E-04 | -2.2228E-03 | -3.0160E-03 | 2.3754E-03 | -2.6960E-03 |
| A18 | 7.6899E-05 | -6.5146E-04 | -1.6305E-03 | 1.3498E-03 | -9.4354E-04 |

(continued)

| second embodiment | | | | |
|---|---|---|---|---|
| Aspherical coefficient | | | | |
| Surface numeral | S1 | S2 | S3 | S4 | S5 |
| A20 | 3.2755E-05 | -7.5852E-04 | -1.0606E-03 | 3.0924E-04 | -1.6510E-04 |
| Surface numeral | S6 | S7 | S8 | S9 | S10 |
| K | -7.5978E+00 | -6.0041E+01 | -5.6041E+01 | 0.0000E+00 | 0.0000E+00 |
| A4 | -2.1582E-01 | 1.6889E-01 | 1.6895E-01 | 1.1426E-01 | 6.9795E-01 |
| A6 | 1.7447E-02 | 2.3942E-02 | 2.8787E-02 | -1.7412E-01 | 4.1128E-01 |
| A8 | 1.1275E-02 | -3.6208E-03 | 3.5331E-04 | 3.0184E-01 | -7.8857E-02 |
| A10 | 2.5478E-03 | -5.5669E-04 | 9.5859E-04 | -5.1463E-02 | 6.5994E-02 |
| A12 | -3.5107E-03 | -2.1785E-03 | -1.5188E-03 | 5.1200E-02 | -6.2815E-02 |
| A14 | -3.2558E-03 | -1.1074E-03 | -1.0925E-03 | -1.1153E-01 | 1.4770E-01 |
| A16 | -1.7518E-03 | -6.4600E-04 | -7.6926E-04 | 6.5140E-02 | -1.1319E-01 |
| A18 | -5.9859E-04 | -2.0948E-04 | -3.1356E-04 | 1.5308E-02 | 4.3193E-02 |
| A20 | -1.4285E-04 | -2.7577E-05 | -8.7289E-05 | -7.7928E-03 | 1.6929E-02 |
| A22 | 0.0000E+00 | 0.0000E+00 | 0.0000E+00 | -1.6137E-02 | -2.2146E-02 |
| A24 | 0.0000E+00 | 0.0000E+00 | 0.0000E+00 | -6.0054E-03 | 1.7750E-03 |
| A26 | 0.0000E+00 | 0.0000E+00 | 0.0000E+00 | 2.9009E-02 | 1.4048E-02 |
| A28 | 0.0000E+00 | 0.0000E+00 | 0.0000E+00 | -2.0193E-02 | -1.1347E-02 |
| A30 | 0.0000E+00 | 0.0000E+00 | 0.0000E+00 | 4.5491E-03 | 3.7473E-03 |

FIG. 6 is an aberration diagram of the optical system of the second embodiment when the movable lens group is located at the telephoto end. FIG. 8 is an aberration diagram of the optical system of the second embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 6 and FIG. 8, the longitudinal spherical aberration, the curvature of field, and the distortion of the optical system of the second embodiment have been controlled, thus the optical system of this embodiment has good imaging quality.

Third embodiment

Referring to FIG. 9 to FIG. 12, the difference between a structure of the third embodiment and a structure of the first embodiment is that the image side surface S8 of the fourth lens L4 is convex on the optical axis. The other of the structure of the third embodiment is referred to the other of the structure of first embodiment.

table 3a

| Surface numeral | Lens numeral | Surface type | Y RADIUS (mm) | Thickness (mm) | Material | refractive index | Abbe number | Focal length (mm) |
|---|---|---|---|---|---|---|---|---|
| | | | | third embodiment | | | | |
| object side | object side | sphere | infinity | A | | | | |
| Aperture stop | STO | sphere | infinity | -0.561 | | | | |
| S1 | L1 | asphere | 2.595 | 1.117 | plastic | 1.547 | 56.110 | 4.312 |
| S2 | | asphere | -21.797 | 0.069 | | | | |
| S3 | L2 | asphere | 15.940 | 0.300 | plastic | 1.641 | 23.900 | -6.134 |
| S4 | | asphere | 3.131 | 0.806 | | | | |
| S5 | L3 | asphere | 63.765 | 0.696 | plastic | 1.547 | 56.110 | 6.146 |
| S6 | | asphere | -3.532 | B | | | | |
| S7 | L4 | asphere | -5.432 | 0.300 | plastic | 1.547 | 56.110 | -14.328 |
| S8 | | asphere | -18.078 | 0.732 | | | | |
| S9 | L5 | asphere | -4.473 | 1.253 | plastic | 1.547 | 56.110 | -7.711 |
| S10 | | asphere | -4.675 | C | | | | |
| S11 | optical filterIR | sphere | infinity | 0.210 | glass | 1.519 | 64.170 | |
| S12 | | sphere | infinity | 1.023 | | | | |
| IMG | imaging surface | sphere | infinity | 0.000 | | | | |

table 3b

| | FNO | TTL (mm) | A(mm) | B(mm) | C(mm) | f(mm) | FOV(°) |
|---|---|---|---|---|---|---|---|
| telephoto end | 2.2 | 7.69 | infinity | 0.481 | 0.71 | 7.3 | 48.7 |
| wide-angle end | 2.0 | 7.69 | 100 | 0.891 | 0.3 | 6.42 | 47.2 |

Table 3c shows the coefficients of the higher-order terms that can be used for each aspherical mirror surface in the third embodiment, wherein each aspherical surface shape can be defined by the formula provided in the first embodiment.

table 3c

| Surface numeral | S1 | S2 | S3 | S4 | S5 |
|---|---|---|---|---|---|
| | | third embodiment | | | |
| | | Aspherical coefficient | | | |
| K | -6.9587E+00 | -9.8926E+01 | 0.0000E+00 | -6.9739E-01 | 0.0000E+00 |
| A4 | 4.0167E-01 | -8.8740E-02 | -8.3215E-02 | -2.9024E-02 | -1.4789E-01 |
| A6 | -1.1008E-01 | -1.6734E-02 | -4.7007E-03 | -3.3396E-02 | -4.4244E-03 |
| A8 | 7.7540E-03 | -2.3884E-03 | 3.8013E-02 | 2.6500E-02 | 1.9203E-02 |
| A10 | 2.1174E-05 | 5.2559E-03 | 9.8997E-04 | -4.6429E-03 | 2.6858E-03 |
| A12 | 1.3033E-03 | -1.7046E-03 | -2.5327E-04 | -5.4194E-03 | -4.1912E-03 |

(continued)

| third embodiment | | | | | |
|---|---|---|---|---|---|
| Aspherical coefficient | | | | | |
| Surface numeral | S1 | S2 | S3 | S4 | S5 |
| A14 | -2.1165E-03 | 1.6299E-03 | 3.0710E-03 | 4.9834E-04 | -2.9176E-03 |
| A16 | -1.1049E-03 | -2.4318E-03 | -1.5531E-03 | 1.4513E-03 | -9.7313E-04 |
| A18 | -4.7447E-04 | -3.0781E-04 | 1.1768E-03 | 1.4082E-03 | -1.1860E-04 |
| A20 | -2.7864E-05 | -6.7159E-04 | -4.0300E-04 | 4.9183E-04 | 1.6362E-05 |
| Surface numeral | S6 | S7 | S8 | S9 | S10 |
| K | -8.0402E+00 | -3.2516E+01 | 9.0484E+01 | 0.0000E+00 | 0.0000E+00 |
| A4 | -2.0799E-01 | 1.4730E-01 | 1.5711E-01 | 1.0589E-01 | 6.7253E-01 |
| A6 | 1.9749E-02 | 2.4358E-02 | 3.4562E-02 | -1.9162E-01 | 4.5571E-01 |
| A8 | 1.1865E-02 | -6.5099E-03 | -4.5906E-03 | 2.9272E-01 | 5.1404E-03 |
| A10 | 7.2725E-04 | -1.2092E-05 | -1.2366E-04 | -4.3338E-02 | 9.4758E-02 |
| A12 | -3.8314E-03 | -1.2345E-03 | -1.5059E-03 | 6.0380E-02 | -7.6517E-02 |
| A14 | -2.4968E-03 | -3.5153E-04 | -7.1034E-04 | -1.1348E-01 | 1.2815E-01 |
| A16 | -1.1631E-03 | -2.3936E-04 | -4.3526E-04 | 6.0180E-02 | -1.0814E-01 |
| A18 | -3.6928E-04 | -9.6704E-05 | -1.8974E-04 | 1.0158E-02 | 5.9332E-02 |
| A20 | -9.9057E-05 | -8.5877E-06 | -6.1522E-05 | -6.8789E-03 | 1.4913E-02 |
| A22 | 0.0000E+00 | 0.0000E+00 | 0.0000E+00 | -1.0684E-02 | -3.6272E-02 |
| A24 | 0.0000E+00 | 0.0000E+00 | 0.0000E+00 | -6.4895E-03 | 6.3648E-03 |
| A26 | 0.0000E+00 | 0.0000E+00 | 0.0000E+00 | 2.5573E-02 | 2.3624E-02 |
| A28 | 0.0000E+00 | 0.0000E+00 | 0.0000E+00 | -1.9540E-02 | -2.1631E-02 |
| A30 | 0.0000E+00 | 0.0000E+00 | 0.0000E+00 | 5.4264E-03 | 7.0676E-03 |

FIG. 10 is an aberration diagram of the optical system of the third embodiment when the movable lens group is located at the telephoto end. FIG. 12 is an aberration diagram of the optical system of the third embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 10 and FIG. 12, the longitudinal spherical aberration, the curvature of field, and the distortion of the optical system of the third embodiment have been controlled, thus the optical system of this embodiment has good imaging quality.

Fourth embodiment

Referring to FIG. 13 to FIG. 16, the difference between a structure of the fourth embodiment and a structure of the first embodiment is that the image side surface S8 of the fourth lens L4 is convex on the optical axis. The other of the structure of the fourth embodiment is referred to the other of the structure of first embodiment.

table 4a

| Surface numeral | Lens numeral | Surface type | Y RADIUS (mm) | Thickness (mm) | Material | refractive index | Abbe number | Focal length (mm) |
|---|---|---|---|---|---|---|---|---|
| | | | fourth embodiment | | | | | |
| object side | object side | sphere | infinity | A | | | | |
| Aperture stop | STO | sphere | infinity | -0.580 | | | | |
| S1 | L1 | asphere | 2.518 | 1.120 | plastic | 1.547 | 56.110 | 4.178 |
| S2 | | asphere | -20.641 | 0.153 | | | | |
| S3 | L2 | asphere | 13.499 | 0.283 | plastic | 1.641 | 23.900 | -5.872 |
| S4 | | asphere | 2.920 | 0.703 | | | | |
| S5 | L3 | asphere | 68.496 | 0.675 | plastic | 1.547 | 56.110 | 6.323 |
| S6 | | asphere | -3.626 | B | | | | |
| S7 | L4 | asphere | -5.688 | 0.300 | plastic | 1.547 | 56.110 | -13.359 |
| S8 | | asphere | -26.219 | 0.847 | | | | |
| S9 | L5 | asphere | -4.782 | 1.080 | plastic | 1.547 | 56.110 | -7.163 |
| S10 | | asphere | -5.511 | C | | | | |
| S11 | optical filterIR | sphere | infinity | 0.210 | glass | 1.519 | 64.170 | |
| S12 | | sphere | infinity | 0.930 | | | | |
| IMG | imaging surface | sphere | infinity | 0.000 | | | | |

table 4b

| | FNO | TTL (mm) | A(mm) | B(mm) | C(mm) | f(mm) | FOV(°) |
|---|---|---|---|---|---|---|---|
| telephoto end | 2.2 | 7.37 | infinity | 0.46 | 0.62 | 7.3 | 49.2 |
| wide-angle end | 2.0 | 7.37 | 100 | 0.86 | 0.22 | 6.37 | 47.2 |

Table 4c shows the coefficients of the higher-order terms that can be used for each aspherical mirror surface in the fourth embodiment, wherein each aspherical surface shape can be defined by the formula provided in the first embodiment.

table 4c

| | | | | | |
|---|---|---|---|---|---|
| fourth embodiment | | | | | |
| Aspherical coefficient | | | | | |
| Surface numeral | S1 | S2 | S3 | S4 | S5 |
| K | -6.7687E+00 | -8.8212E+01 | 0.0000E+00 | -7.5640E-01 | 0.0000E+00 |
| A4 | 4.0729E-01 | -9.0102E-02 | -7.9387E-02 | -3.2255E-02 | -1.4819E-01 |
| A6 | -1.1598E-01 | -1.4543E-02 | -4.5427E-03 | -3.6965E-02 | -6.6557E-03 |
| A8 | 8.1927E-03 | -4.0183E-03 | 3.6122E-02 | 3.0313E-02 | 2.1296E-02 |
| A10 | 6.8449E-04 | 6.1665E-03 | 9.1549E-04 | -5.5985E-03 | 1.3441E-03 |
| A12 | 1.1740E-03 | -2.1279E-03 | 6.6238E-04 | -5.7602E-03 | -4.3504E-03 |

(continued)

| fourth embodiment | | | | | |
|---|---|---|---|---|---|
| Aspherical coefficient | | | | | |
| Surface numeral | S1 | S2 | S3 | S4 | S5 |
| A14 | -2.4512E-03 | 1.0618E-03 | 2.3649E-03 | 7.4782E-04 | -2.2462E-03 |
| A16 | -1.0041E-03 | -2.0125E-03 | -1.5874E-03 | 1.0349E-03 | -7.5827E-04 |
| A18 | -2.9766E-04 | -2.2907E-04 | 1.4814E-03 | 1.8499E-03 | -1.3106E-04 |
| A20 | 1.2021E-04 | -4.6756E-04 | -7.9785E-04 | 5.5329E-04 | 4.6604E-05 |
| Surface numeral | S6 | S7 | S8 | S9 | S10 |
| K | -8.1856E+00 | -3.0942E+01 | 4.6945E+01 | 0.0000E+00 | 0.0000E+00 |
| A4 | -2.0603E-01 | 1.4573E-01 | 1.6040E-01 | 6.2416E-02 | 2.0435E-01 |
| A6 | 2.1887E-02 | 2.3194E-02 | 3.7301E-02 | -2.0394E-01 | 3.5085E-01 |
| A8 | 1.1772E-02 | -8.0055E-03 | -6.5524E-03 | 2.9323E-01 | 7.3455E-02 |
| A10 | -5.6113E-04 | 4.1054E-05 | -1.0735E-03 | -3.4240E-02 | 1.9268E-01 |
| A12 | -3.6260E-03 | -7.8447E-05 | -9.0199E-04 | 6.9944E-02 | -6.8055E-02 |
| A14 | -2.0581E-03 | -1.8704E-04 | -3.7221E-04 | -1.1283E-01 | 7.6832E-02 |
| A16 | -1.1618E-03 | -2.8553E-04 | -2.4865E-04 | 5.4571E-02 | -1.1927E-01 |
| A18 | -4.3882E-04 | -3.2579E-04 | -2.3962E-04 | 6.9178E-03 | 9.3967E-02 |
| A20 | -8.3763E-05 | -7.1729E-05 | -1.2652E-04 | -4.6720E-03 | 2.6804E-02 |
| A22 | 0.0000E+00 | 0.0000E+00 | 0.0000E+00 | -7.1427E-03 | -5.8333E-02 |
| A24 | 0.0000E+00 | 0.0000E+00 | 0.0000E+00 | -7.8887E-03 | -1.7510E-04 |
| A26 | 0.0000E+00 | 0.0000E+00 | 0.0000E+00 | 2.2929E-02 | 4.2003E-02 |
| A28 | 0.0000E+00 | 0.0000E+00 | 0.0000E+00 | -1.7671E-02 | -2.5322E-02 |
| A30 | 0.0000E+00 | 0.0000E+00 | 0.0000E+00 | 4.9237E-03 | 3.6029E-03 |

FIG. 14 is an aberration diagram of the optical system of the fourth embodiment when the movable lens group is located at the telephoto end. FIG. 16 is an aberration diagram of the optical system of the fourth embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 14 and FIG. 16, the longitudinal spherical aberration, the curvature of field, and the distortion of the optical system of the fourth embodiment have been controlled, thus the optical system of this embodiment has good imaging quality.

Fifth embodiment

Referring to FIG. 17 to FIG. 20, the difference between a structure of the fifth embodiment and a structure of the first embodiment is that the object side surface S5 of the third lens L3 is concave on the optical axis, and the image side surface S8 of the fourth lens L4 is convex on the optical axis. The other of the structure of the fifth embodiment is referred to the other of the structure of first embodiment.

table 5a

| Surface numeral | Lens numeral | Surface type | Y RADIUS (mm) | Thickness (mm) | Material | refractive index | Abbe number | Focal length (mm) |
|---|---|---|---|---|---|---|---|---|
| | | | | fifth embodiment | | | | |
| object side | object side | sphere | infinity | A | | | | |
| Aperture stop | STO | sphere | infinity | -0.671 | | | | |
| S1 | L1 | asphere | 2.244 | 1.219 | plastic | 1.547 | 56.110 | 3.646 |
| S2 | | asphere | -14.337 | 0.050 | | | | |
| S3 | L2 | asphere | 12.506 | 0.280 | plastic | 1.641 | 23.900 | -5.640 |
| S4 | | asphere | 2.780 | 0.656 | | | | |
| S5 | L3 | asphere | -12.362 | 0.488 | plastic | 1.547 | 56.110 | 7.908 |
| S6 | | asphere | -3.247 | B | | | | |
| S7 | L4 | asphere | -3.254 | 0.300 | plastic | 1.547 | 56.110 | -9.225 |
| S8 | | asphere | -9.473 | 1.080 | | | | |
| S9 | L5 | asphere | -11.963 | 0.832 | plastic | 1.547 | 56.110 | -6.922 |
| S10 | | asphere | -8.860 | C | | | | |
| S11 | optical filterIR | sphere | infinity | 0.210 | glass | 1.519 | 64.170 | |
| S12 | | sphere | infinity | 0.814 | | | | |
| IMG | imaging surface | sphere | infinity | 0.000 | | | | |

table 5b

| | FNO | TTL (mm) | A(mm) | B(mm) | C(mm) | f(mm) | FOV(°) |
|---|---|---|---|---|---|---|---|
| telephoto end | 2.2 | 6.9 | infinity | 0.493 | 0.48 | 7.3 | 49.1 |
| wide-angle end | 2.0 | 6.9 | 100 | 0.843 | 0.13 | 6.29 | 46.8 |

Table 5c shows the coefficients of the higher-order terms that can be used for each aspherical mirror surface in the fifth embodiment, wherein each aspherical surface shape can be defined by the formula provided in the first embodiment.

table 5c

| | | | | | |
|---|---|---|---|---|---|
| fifth embodiment | | | | | |
| Aspherical coefficient | | | | | |
| Surface numeral | S1 | S2 | S3 | S4 | S5 |
| K | -5.8233E+00 | -6.5740E+01 | 0.0000E+00 | -1.4762E+00 | 0.0000E+00 |
| A4 | 4.3817E-01 | -9.7376E-02 | -3.0256E-02 | -7.3279E-02 | -1.7135E-01 |
| A6 | -1.4831E-01 | -1.1195E-02 | -7.6102E-03 | -5.4584E-02 | 2.6124E-04 |
| A8 | 5.9237E-03 | -5.2746E-03 | 2.2450E-02 | 5.0575E-02 | 2.6530E-02 |
| A10 | 5.4812E-03 | 8.2705E-03 | 7.7987E-04 | -4.0670E-03 | -6.5649E-04 |
| A12 | 3.4968E-03 | -4.4824E-03 | 5.4385E-03 | -1.0799E-02 | -6.4859E-03 |

(continued)

| fifth embodiment | | | | |
|---|---|---|---|---|
| Aspherical coefficient | | | | |
| Surface numeral | S1 | S2 | S3 | S4 | S5 |
| A14 | -4.2993E-03 | 1.4869E-03 | 2.1251E-03 | 8.1067E-04 | 5.8843E-04 |
| A16 | -2.9664E-03 | -2.8352E-03 | -6.5252E-03 | 1.6332E-03 | 3.1630E-03 |
| A18 | -1.0124E-03 | -7.5250E-04 | 2.6550E-03 | 7.0849E-04 | 1.4012E-03 |
| A20 | -6.2447E-05 | -6.0419E-04 | 1.1439E-03 | 3.7434E-04 | 1.7953E-04 |
| Surface numeral | S6 | S7 | S8 | S9 | S10 |
| K | -1.0492E+01 | -2.0968E+01 | -9.9000E+01 | 0.0000E+00 | 0.0000E+00 |
| A4 | -1.7284E-01 | 1.2006E-01 | 2.0071E-01 | -1.0349E-01 | -1.9564E-01 |
| A6 | 4.9954E-02 | -4.3784E-03 | 5.6114E-03 | -2.2070E-01 | 2.9753E-01 |
| A8 | 6.3318E-03 | -8.9183E-03 | -1.0012E-02 | 3.3703E-01 | 1.8641E-01 |
| A10 | -9.2724E-03 | 7.2046E-03 | 2.3665E-03 | -4.3302E-02 | 3.4656E-01 |
| A12 | -7.6111E-03 | -2.9987E-04 | -1.7181E-04 | 6.7958E-02 | -4.8727E-02 |
| A14 | 7.5865E-04 | -2.8653E-04 | 3.0772E-04 | -7.1253E-02 | -1.1803E-02 |
| A16 | 2.2382E-03 | -3.4880E-04 | -4.6470E-06 | 6.1080E-02 | -1.0875E-01 |
| A18 | 7.6071E-04 | 5.4940E-05 | 6.7125E-05 | -2.5076E-02 | 1.6721E-01 |
| A20 | -4.2019E-05 | 1.1267E-04 | 2.4083E-05 | 3.9542E-04 | 2.7301E-02 |
| A22 | 0.0000E+00 | 0.0000E+00 | 0.0000E+00 | 1.5370E-02 | -9.5697E-02 |
| A24 | 0.0000E+00 | 0.0000E+00 | 0.0000E+00 | -1.7506E-02 | 5.4279E-03 |
| A26 | 0.0000E+00 | 0.0000E+00 | 0.0000E+00 | 1.0927E-02 | 7.1641E-02 |
| A28 | 0.0000E+00 | 0.0000E+00 | 0.0000E+00 | -2.5453E-03 | -4.5744E-02 |
| A30 | 0.0000E+00 | 0.0000E+00 | 0.0000E+00 | -3.5152E-04 | 9.8123E-03 |

FIG. 18 is an aberration diagram of the optical system of the fifth embodiment when the movable lens group is located at the telephoto end. FIG. 20 is an aberration diagram of the optical system of the fifth embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 18 and FIG. 20, the longitudinal spherical aberration, the curvature of field, and the distortion of the optical system of the fifth embodiment have been controlled, thus the optical system of this embodiment has good imaging quality.

Table 6 shows the values of each relational expression in the optical system 10 of the first to fifth embodiments.

Table 6

| relational expression | first embodiment | second embodiment | third embodiment | fourth embodiment | fifth embodiment |
|---|---|---|---|---|---|
| DLmax/TTL | 0.796 | 0.791 | 0.801 | 0.817 | 0.833 |
| TTL/fmax | 0.978 | 1.055 | 1.053 | 1.010 | 0.945 |
| T34max-T34min | 0.410 | 0.550 | 0.410 | 0.405 | 0.349 |
| \|T23\|+\|T45\|/ \|T34\|max | 2.320 | 1.521 | 1.732 | 1.798 | 2.059 |
| SD52/fmax | 0.250 | 0.276 | 0.304 | 0.315 | 0.368 |

(continued)

| relational expression | first embodiment | second embodiment | third embodiment | fourth embodiment | fifth embodiment |
|---|---|---|---|---|---|
| \|f123/fmax\| | 0.530 | 0.646 | 0.648 | 0.648 | 0.628 |
| \|f45/fmax\| | 0.462 | 0.607 | 0.637 | 0.588 | 0.477 |
| ET1/CT1 | 0.358 | 0.532 | 0.403 | 0.384 | 0.334 |
| \|SAG11\|+\|SAG12\|/CT1 | 0.642 | 0.468 | 0.597 | 0.616 | 0.666 |
| \|SAG51\|+\|SAG52\|/CT5 | 0.296 | 0.988 | 0.402 | 0.605 | 0.723 |
| SD4/SD5 | 0.587 | 0.641 | 0.553 | 0.561 | 0.495 |
| SD32/SD41 | 1.265 | 1.073 | 1.137 | 1.098 | 1.150 |
| f123/f45 | 1.149 | 1.065 | 1.018 | 1.102 | 1.316 |
| f/R32 | -1.834 | -2.121 | -2.067 | -2.013 | -2.248 |
| f/R22 | 2.401 | 2.289 | 2.331 | 2.500 | 2.626 |
| CT3/CT2 | 2.451 | 2.735 | 2.320 | 2.384 | 1.744 |
| CT1/CT2 | 5.092 | 4.251 | 3.725 | 3.958 | 4.355 |
| CT3/SAG31 | -27.678 | -19.710 | -7.951 | -8.422 | -2.529 |
| TTL/ImgH | 1.505 | 1.177 | 1.176 | 1.127 | 1.055 |
| CT5/∑CT | 0.305 | 0.216 | 0.342 | 0.312 | 0.267 |
| CT5/CT4 | 3.947 | 2.627 | 4.176 | 3.601 | 2.774 |
| SD52/SD51 | 1.377 | 1.496 | 1.637 | 1.575 | 1.722 |
| f1/fmax | 0.474 | 0.620 | 0.591 | 0.572 | 0.499 |
| f2/fmax | -0.703 | -0.777 | -0.840 | -0.804 | -0.773 |
| f3/fmax | 0.754 | 0.721 | 0.842 | 0.866 | 1.083 |
| f4/fmax | -0.660 | -5.907 | -1.963 | -1.830 | -1.264 |
| f5/fmax | -2.069 | -0.704 | -1.056 | -0.981 | -0.948 |
| R11/R12 | -0.324 | -0.101 | -0.119 | -0.122 | -0.157 |
| R21/R22 | 13.587 | 8.470 | 5.090 | 4.624 | 4.498 |
| R31/R32 | -2.917 | -4.649 | -18.054 | -18.889 | 3.807 |
| R41/R42 | -0.473 | 0.719 | 0.300 | 0.217 | 0.343 |
| R51/R52 | 2.952 | 0.694 | 0.957 | 0.868 | 1.350 |

The optical systems in the above embodiments have continuous internal focusing function and the characteristic of miniaturization.

Referring to FIG. 21, an embodiment of the present application further provides a lens module 20. The lens module 20 includes the optical system of any one of the above embodiments and a photosensitive chip 201. The photosensitive chip 201 is disposed on the image side of the optical system, and the photosensitive chip 201 and the optical system can be fixed by a bracket. The photosensitive chip can be a CCD sensor (Charge Coupled Device) or a CMOS sensor (Complementary Metal Oxide Semiconductor). In general, during assembly, the imaging surface IMG of the optical system overlaps with a photosensitive surface of the photosensitive chip 201. By adopting the above optical system, the lens module 20 can have the continuous internal focusing function and the characteristic of miniaturization.

Referring to FIG. 22, an embodiment of the present application further provides an electronic device 30. The electronic device 30 includes a housing 310 and the lens module 20 of the above embodiment. The lens module 20 is mounted on the housing 310. The housing 310 may be a display screen, a circuit board, a middle frame, a back cover, or other components. The electronic device 30 may be, but is not limited to, a smart phone, a smart watch, smart glasses, an e-book reader, a tablet computer, a biometric device (such as a fingerprint recognition device or a pupil recognition device, etc.), a PDA (Personal Digital Assistant), or the like. Since the lens module 20 can have the characteristic of miniaturization while having the continuous internal focusing function, when the lens module 20 is used, the electronic device 30 can provide a smaller space for assembling the lens module 20, thereby reducing a thickness of the device and making the shooting speed and focusing speed faster.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

**Claims**

1. An optical system consisting of five lenses having refractive power, from an object side to an image side along an optical axis (101) of the optical system, the fifth lenses sequentially comprising a first lens (L1), a second lens (L2), a third lens (L3), a fourth lens (L4), and a fifth lens (L5);

   wherein the first lens (L1), the second lens (L2), and the third lens (L3) constitute a fixed lens group (G1), the fourth lens (L4) and the fifth lens (L5) constitute a movable lens group (G2), the fixed lens group (G1) is fixed relative to an imaging surface (IMG) of the optical system, and the movable lens group (G2) is capable of moving between the fixed lens group (G1) and the imaging surface (IMG) along the optical axis;
   the first lens (L1) has positive refractive power, an object side surface (S1) of the first lens (L1) is convex near the optical axis (101), the second lens (L2) has negative refractive power, the third lens (L3) has positive refractive power, the fourth lens (L4) has negative refractive power, and the fifth lens (L5) has negative refractive power;
   the optical system satisfies following relational expressions:

   $$0.9 < TTL/fmax < 1.1, \ 34deg < FOV < 50deg, \ 0.7 < TTL/ImgH < 1.7;$$

   wherein, TTL is a distance from the object side surface (S1) of the first lens (L1) to the imaging surface (IMG) of the optical system along the optical axis (101), fmax is a maximum effective focal length of the optical system, FOV is a maximum field of view of the optical system, and ImgH is a full image height corresponding to the maximum field of view of the optical system.

2. The optical system of claim 1, further satisfying at least one of following relational expressions:

   $$0.2mm < (T34max-T34min) < 0.7mm, \ 1 < (|T23|+|T45|)/|T34max| < 3;$$

   wherein, T34min is a minimum distance from an image side surface (S6) of the third lens (L3) to an object side surface (S7) of the fourth lens (L4) along the optical axis (101), T34max is a maximum distance from the image side surface (S6) of the third lens (L3) to the object side surface (S7) of the fourth lens (L4) along the optical axis (101), T23 is a distance from an image side surface (S4) of the second lens (L2) to an object side surface (S5) of the third lens (L3) along the optical axis (101), and T45 is a distance from an image side surface (S8) of the fourth lens (L4) to an object side surface (S9) of the fifth lens (L5) along the optical axis (101).

3. The optical system of claim 1, further satisfying following relational expression:

   $$0.75 < DLmax/TTL < 0.9;$$

   DLmax is a maximum distance from the object side surface (S1) of the first lens (L1) to an image side surface (S10) of the fifth lens (L5) along the optical axis (101).

4. The optical system of claim 1, further satisfying at least one of following relational expressions:

$$0.2 < SD52/fmax < 0.4, 0.2 < (|SAG51|+|SAG52|)/CT5 < 1;$$

wherein, SD52 is a maximum effective aperture radius of an image side surface (S10) of the fifth lens (L5), SAG51 is a distance from an intersection of an object side surface (S9) of the fifth lens (L5) and the optical axis (101) to a position where the object side surface (S9) of the fifth lens (L5) has a maximum effective aperture along the optical axis (101), SAG52 is a distance from an intersection of the image side surface (S10) of the fifth lens (L5) and the optical axis (101) to a position where the image side surface (S10) of the fifth lens (L5) has a maximum effective aperture along the optical axis (101), and CT5 is a thickness of the fifth lens (L5) on the optical axis (101).

5. The optical system of claim 1, further satisfying following relational expression:

$$0.5 < |f123/fmax| < 0.7;$$

wherein, f123 is a combined focal length of the first lens (L1).

6. The optical system of claim 1, further satisfying following relational expression:

$$0.4 < |f45/fmax| < 0.7;$$

wherein, f45 is a combined focal length of the fourth lens (L4) and the fifth lens (L5).

7. The optical system of claim 1, further satisfying following relational expression:

$$1 < f123/f45 < 1.4;$$

wherein, f123 is a combined focal length of the first lens (L1), the second lens (L2), and the third lens (L3), and f45 is a combined focal length of the fourth lens (L4) and the fifth lens (L5).

8. The optical system of claim 1, further satisfying at least one of following relational expressions:

$$0.3 < ET1/CT1 < 0.6, 0.4 < (|SAG11|+|SAG12|)/CT1 < 0.7;$$

wherein, ET1 is an edge thickness of the first lens (L1), CT1 is a thickness of the first lens (L1) on the optical axis (101), SAG11 is a distance from an intersection of the object side surface (S1) of the first lens (L1) and the optical axis (101) to a position where the object side surface (101) of the first lens (L1) has a maximum effective aperture along a direction parallel to the optical axis (101), and SAG12 is a distance from an intersection of an image side surface (S2) of the first lens (L1) and the optical axis (101) to a position where the image side surface (S2) of the first lens (L1) has a maximum effective aperture along the direction parallel to the optical axis (101).

9. The optical system of claim 1, further satisfying at least one of following relational expressions:

$$0.4 < SD4/SD5 < 0.7, 1 < SD32/SD41 < 1.4, 1.3 < SD52/SD51 < 1.8;$$

wherein, SD4 is a larger value of a maximum effective aperture of an object side surface (S7) of the fourth lens (L4) and a maximum effective aperture of an image side surface (S8) of the fourth lens (L4), SD5 is a larger value of a maximum effective aperture of an object side surface (S9) of the fifth lens (L5) and a maximum effective aperture of an image side surface (S10) of the fifth lens (L5), SD32 is a maximum effective aperture of an image side surface (S6) of the third lens (L3), SD41 is a maximum effective aperture of the object side surface (S7) of the fourth lens (L4), SD51 is a maximum effective aperture radius of the object side surface (S9) of the fifth lens (L5), and SD52 is a maximum effective aperture radius of the image side surface (S10) of the fifth lens (L5).

10. The optical system of claim 1, further satisfying at least one of following relational expressions:

$$-3 < fmax/R32 < -1, \ 2 < fmax/R22 < 3, \ 30 < CT3/SAG31 < -2;$$

wherein, R32 is a radius of curvature of an image side surface (S6) of the third lens (L3), R22 is a radius of curvature of an image side surface (S4) of the second lens (L2), CT3 is a thickness of the third lens (L3) on the optical axis (101), SAG31 is a distance from an intersection of an object side surface (S5) of the third lens (L3) and the optical axis (101) to a position where the object side surface (S5) of the third lens (L3) has a maximum effective aperture along the optical axis (101).

**11.** The optical system of claim 1, further satisfying at least one of following relational expressions:

$$1 < CT3/CT2 < 3, \ 3 < CT1/CT2 < 5.5;$$

wherein, CT1 is a thickness of the first lens (L1) on the optical axis (101), CT2 is a thickness of the second lens (L2) on the optical axis (101), and CT3 is a thickness of the third lens (L3) on the optical axis (101).

**12.** The optical system of claim 1, further satisfying following relational expression:

$$0.2 < CT5/\Sigma CT < 0.35;$$

wherein, CT5 is a thickness of the fifth lens (L5) on the optical axis (101), and $\Sigma CT$ is a sum of thicknesses of the first lens (L1), the second lens (L2), the third lens (L3), the fourth lens (L4), and the fifth lens (L5) on the optical axis (101).

**13.** The optical system of claim 1, further satisfying relational expression:

$$2 < CT5/CT4 < 5;$$

wherein, CT4 is a thickness of the fourth lens (L4) on the optical axis (101), and CT5 is a thickness of the fifth lens (L5) on the optical axis (101).

**14.** A lens module (20) comprising a photosensitive chip (201) and the optical system of any one of claims 1 to 8, the photosensitive chip (201) being located on an image side of the optical system.

**15.** An electronic device (30) comprising a housing (310) and the lens module (20) of claim 9, the lens module (20) being located in the housing (310).

FIG. 1

FIG. 2

FIG. 3

| 656.2700 nm |
| 587.5600 nm |
| 546.0700 nm |
| 486.1300 nm |
| 435.8300 nm |

| ------- 546.0700 nm T |
| ——— 546.0700 nm S |

Longitudinal spherical aberration

Astigmatic field curves
Image height (mm)

Distortion
Image height (mm)

Deviation of focus point (mm)
(a)

Deviation of focus point (mm)
(b)

Distortion(%)
(c)

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

| 656.2700 nm |
| 587.5600 nm |
| 546.0700 nm |
| 486.1300 nm |
| 435.8300 nm |

| 546.0700 nm  T |
| 546.0700 nm  S |

Longitudinal
spherical
aberration

Astigmatic field
curves
Image height (mm)

Distortion
Image height(mm)

Deviation of (mm)
focus point
(a)

Deviation of (mm)
focus point
(b)

Distortion(%)
(c)

FIG. 18

FIG. 19

| 656.2700 nm |
| 587.5600 nm |
| 546.0700 nm |
| 486.1300 nm |
| 435.8300 nm |

| 546.0700 nm T |
| 546.0700 nm S |

Longitudinal spherical aberration

Astigmatic field curves
Image height (mm)

Distortion
Image height (mm)

Deviation of (mm)
focus point
(a)

Deviation of (mm)
focus point
(b)

Distortion (%)
(c)

FIG. 20

FIG. 21

FIG. 22